# EUROPEAN PATENT APPLICATION

(11) **EP 0 787 616 A2**
(43) Date of publication of application: **06.08.1997**
(21) Application number: 96200616.9
(22) Date of filing: 06.03.1996
(51) Int. Cl.: B60K 17/10, B60K 17/346

(54) **Hydromechanic transmission device arranged between drive shaft and one or more driven shafts**

(30) Priority: 22.09.1995 IT TO950751
(71) Applicant: A.R.I.S. S.p.A., 10040 Lombardore, Turin (IT)
(72) Inventor: Bellezza, Paolo, 10077 San Maurizio Canavese, Turin (IT); Bellezza, Giorgio, 10077 San Maurizio Canavese, Turin (IT)
(74) Representative: Richter, Werdermann & Gerbaulet

(57) **Abstract**

Hydromechanic transmission device, hydraulic flow type, engageable between drive shaft and one or more driven shafts, capable of maintaining any number of revs, however low, for the driven shafts, particularly suited for 4-wheel drive vehicles employed for special operations that require very low speeds in both directions of travel, consisting of a mechanical transfer unit (4) associated with at least one hydraulic pump (11a) for feeding the hydraulic motor (7) activating reduction mechanisms connected to a transmission shaft (10) for the front axle (6) and to a second transmission shaft (9) for the rear axle (5) of a truck.

## Description

The subject of the patent is a hydromechanic transmission suitable for utilization in a wide range of applications where it is necessary to maintain significant power and angular speed differences between a drive shaft and one or more driven shafts.

A specific application example of the device, although not limited to this, is for certain vehicles destined for special uses and for which, under certain circumstances, extremely low speeds of the order of 60 m/hr to 4 Km/hr are required.

Currently, known vehicles are capable of attaining reduced running speeds varying between 2-4 Km/hr and 80-100 Km/hr. Wheeled Vehicles with capable of exceeding these performance limits are defined as special vehicles, not suitable for normal transport service.

More specifically, although not exclusively so, the transmission device has been developed for mounting on certain series production vehicles, such as trucks, capable of travelling on and off-road but which for special application requirements must have a broad operating speed range not permitted by current transmission systems.

The principal purpose of the invention is therefore to supply an auxiliary transmission device which can be mounted on any type of vehicle, without altering any of its original specifications, but capable of permitting a wide vehicle speed range, employing, when requested, the maximum or minimum power supplied by the vehicle's endothermic engine, at whatever the requested speed.

In accordance with the purpose outlined, the device in question includes a mechanical transfer-reduction unit with drive shaft and one or more driven shafts; the drive shaft can rotated from the vehicle's engine; the driven shaft(s) connected to the driven wheels via a hydraulic pump connected to a power take-off from the transfer unit's primary shaft actions a hydraulic power reduction unit that feeds a transfer unit pulley shaft, via a disengageable clutch, with the number of revs requested by the operator; the aforementioned transfer unit is equipped with a neutral position that disengages the pulley shaft from the primary shaft's rotation. Other pumps of variable power can be added, in tandem, to the primary hydraulic pump to enable power to be transferred to mechanisms for the various devices with which the vehicle is equipped and for which it could in any case be equipped for carrying out particular tasks.

The device is now described with the aid of the enclosed schematic drawings, of which:
- fig. 1 represents the device applied to the transmission system of a series production vehicle, with 4-wheel drive;
- fig. 2 is the vertical section view of a power reduction unit;
- fig. 3 is a longitudinal section view of the device's main hydraulic pump mounted on the vehicle's transfer unit, according to one of the possible constructional solutions;
- fig. 4 is a longitudinal section view of the device's hydraulic motor;
- fig. 5 is the transmission related hydraulic distribution layout;
- fig. 6 schematically illustrates a variation regarding the mounting of the device on a series production vehicle's transfer unit;
- fig. 7 illustrates the mounting of the device on a specific series production truck.

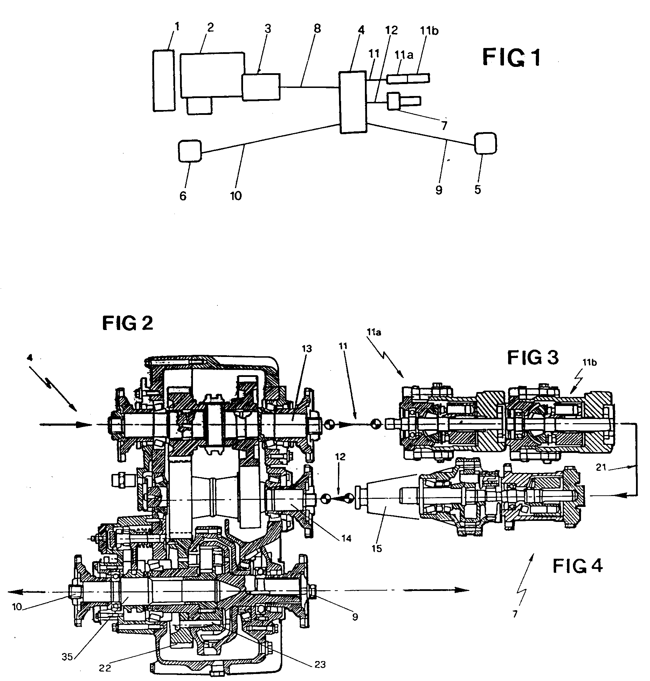

In the drawings, for figs 1 to 4, 1 indicates the vehicle's radiator, fig. 1, 2 indicates the vehicle's engine, 3 indicates the gearbox; 7 indicates the power reduction unit with clutch; 8 indicates the transmission shaft between the gearbox 3 and the transfer unit 4; 9 indicates the transmission shaft between the transfer unit 4 and the rear axle 5; 10 indicates the transmission shaft between the transfer unit and the front axle 6, 11 indicates the transmission shaft between the transfer unit 4 and the hydraulic pumps 11a, 11b, for traction and auxilliary devices respectively. 12 indicates the transmission shaft between the transfer unit 4 and the reduction unit 7 with clutch.
- In fig. 2, the shafts 13, 14 of the transfer unit 4 shown in its entirety, in accordance with the invention, are extended towards the rear part of the vehicle and are connected, via transmission shafts 11, 12 with universal joints, to the shaft for the hydraulic pumps 11a, 11b and the power reduction unit 7 with clutch 15 respectively.

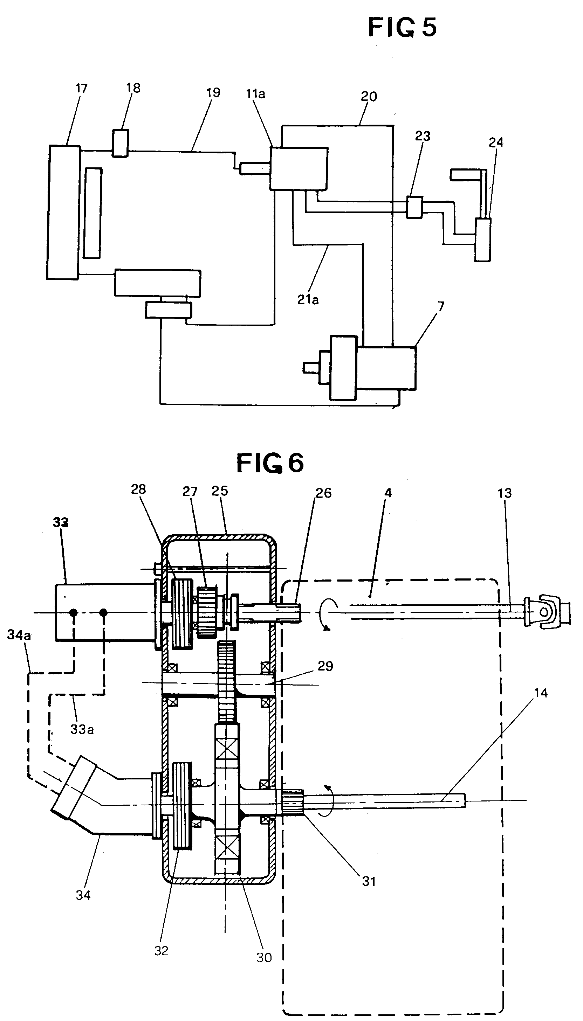

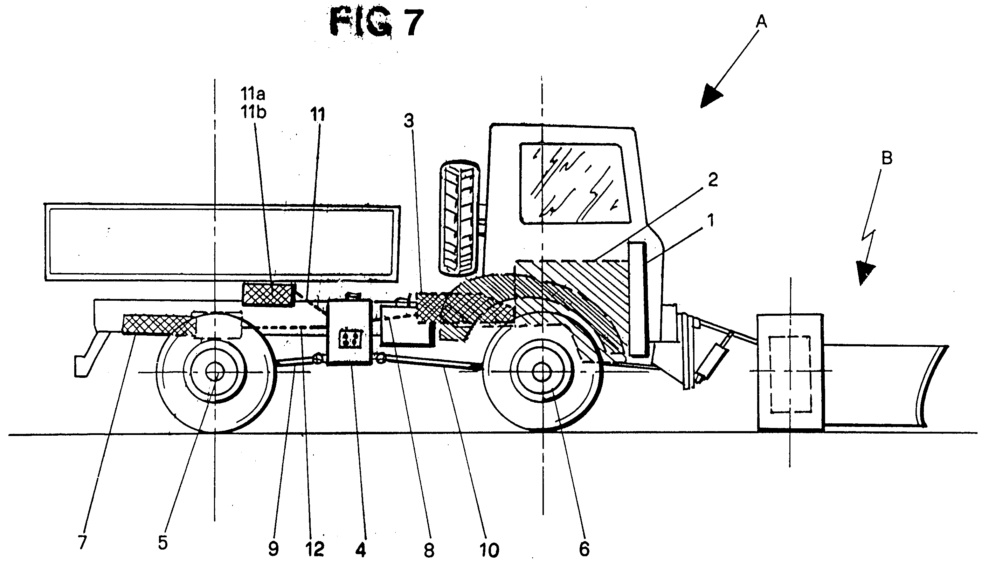

With reference to the layout in fig. 5, operation of the device is as follows: hydraulic oil from the tank 17, via a filter 18 and the supply branch 19, feeds the hydraulic pump 11a which, via tube 20, feeds the power reduction unit 7 which, via the clutch 15 and joint 12, figs. 2,3,4, sets the shaft 14 in rotation, which actions the gear 22 and the epicyclic gear 23 supported by the shaft 35 connected to the transmission shafts 9, 10 of the vehicle's front and rear axles. In fig 5, 24 indicates the control device that, via tube 20, handles the hydraulic oil's flow speed, the flow of which determines the speed of the vehicle -A-, fig. 7, both in forward gears and in reverse.

In accordance with an intuitable structural variation, schematically represented in fig. 6, a box 25 is applied to the transfer unit 4 with the former containing: a shaft 26 connected to the primary shaft 13 of the transfer unit 4; the shaft 26 is integral with the gear 27 capable of actioning a guide pulley 29; the shaft 26 with gear 27 is also connected to the clutch 28; an epicyclic reduction gear 30 with transmission shaft 31 is connected to shaft 14 and to a clutch 32. A hydraulic pump 33 and hydraulic motor 34 are mounted on the outside of the box 25. The hydraulic transmission between the pump 33 and motor 34 occurs via feed and charge 33a and discharge duct branches 34a respectively. The shaft 26 actions the pump 33 and this actions the hydraulic motor 34. This solution, an improvement on that previously described, has the following advantages:
- structural compactness of the assembly
- further ratio reduction via the engagement of gears 27, 29 and the exclusion of the pump 11a and power reduction unit 7, figs. 2, 3, 4, thanks to the clutches 28 and 32, fig. 6.

As is shown in fig. 7 the device in question, indicated as 4, thanks to its minimal overall dimensions can easily be mounted on any type of series production vehicle -A-, particularly heavy transport vehicles assigned to special operations, equipping them, as the illustration shows for example, with a snow plough -B- and shovel or other equipment for operations that require minimal speeds.

From the above, the advantages deriving from using the device which, as surmised, can find advantageous applications also in non vehicular fields, are clear.

## Claims

1. Hydromechanic transmission device, hydraulic flow type, between drive shaft and one or more driven shafts, particularly suited for 4-wheel drive vehicles, including mechanical transfer unit (4) characterized by the association of a hydraulic transmission system with a mechanical transmission system in which the extremity of the shaft (13) of the transfer unit (4) - the opposite end of which is connected to the gearbox via universal joints - is connected to the shaft (11) of a hydraulic pump (11a) fed by a hydraulic oil tank (17); via a tube (21), the aforementioned pump is connected to a hydraulic power reduction unit (7) with clutch (15) that, via a shaft (12) and universal joints, is connected to the intermediate shaft of the transfer unit (4) which transmits power to the epicyclic gear shaft (35) via the gears (22, 23); a shaft (9) for transmitting power to the vehicle's rear axle (5) together with a second shaft (10) for transmitting power to the front axle (6) are connected to the aforementioned shaft.

2. Hydromechanic transmission device, particularly suited for 4-wheel drive trucks, as for claim 1), on which auxiliary hydraulic pumps (11b...) can be mounted in tandem with the hydraulic transmission pump (11a).

3. Hydromechanic device whereby a hydrostatic transmission group, of variable power output according to operation requirements, is mounted on a determined power transmission group.

4. Hydromechanic device in which a box (25) externally supporting a hydraulic pump (33) and a hydraulic motor (34) is mounted on the transfer unit (4); the box (25) contains a clutch (28) connected to the pump (33), mounted on a shaft (26) that is integral with a gear (27) capable of meshing with a guide pulley (29) which in turn meshes with an epicyclic gear (30); the shaft (26) is connected to the transfer unit's shaft (13); the epicyclic gear shaft (31) is connected to shaft (14) of the same transfer unit (4), for the purpose of creating a hydromechanic transmission device in a single assembly.

5. Hydromechanic transmission device including a mechanical transfer unit (4) associated with a hydrostatic group consisting of at least one hydraulic pump (11a) and a hydraulic power reduction unit (7), as described and illustrated for the specified purposes.
